Europäisches Patentamt

European Patent Office

Office européen des brevets

(11) Publication number: **0 376 672**
**A2**

## EUROPEAN PATENT APPLICATION

(21) Application number: 89313577.2

(22) Date of filing: 22.12.89

(51) Int. Cl.5: **F16H 39/14**

(30) Priority: 29.12.88 JP 335193/88
29.12.88 JP 335194/88
18.01.89 JP 9162/89
18.01.89 JP 9163/89

(43) Date of publication of application:
**04.07.90 Bulletin 90/27**

(84) Designated Contracting States:
**DE FR GB IT**

(71) Applicant: **Atake, Minoru**
**579-6, Ohoiso Ohoiso-machi**
**Naka-gun Kanagawa-ken(JP)**

(72) Inventor: **Atake, Minoru**
**579-6, Ohoiso Ohoiso-machi**
**Naka-gun Kanagawa-ken(JP)**

(74) Representative: **Devons, David Jon et al**
**MARKS & CLERK 57-60 Lincoln's Inn Fields**
**London WC2A 3LS(GB)**

(54) **A torque transmission device.**

(57) A torque transmission device with a hydraulic assembly for variable speed control comprises input and output rotors with pump-driving and driven means respectively, so as to be pumped by a differential rotation between said rotors, a control rotor and stator including flow-control and flow-return means associated with them corresponding to aid input and output rotors, and said flow-control means including means for regulating amounts of pumping per a rotation of said control rotor rotating with either one of the input and output rotors.

FIG. 1

## A Torque Transmission Device

This invention relates to a torque transmission device with a hydraulic assembly for variable speed control, and more particular to a torque transmission device for use of car, truck and the like necessary to control the speed of them.

A torque transmission device with a hydraulic assembly is well known in the prior arts, such as a hydraulic variable speed control device described in the specification of Japanese Patent Publication No. 9665/57.

Said device comprises a transmission mechanism having a swash plate pump and a motor which includes the same construction as that of said pump and communicates with said pump by means of a closed fluid circuit, and a gear transmission mechansm adapted to regain back-up torque generated in said pump to a driven shaft, so as to transmit torque powers from a driving shaft to said driven shaft through two parallel routes, one of which includes said fluid circuit and the other of which includes no fluid circuit but also has said gear transmission mechanism.

However, said device involves some unavoidable problems. One of them is that said driving and driven shafts should be arranged in parallel with each other because said device includes gear trains in said transmission mechanism, and the other is that said device is very complicated due to the above-mentioned reason. Furthermore, said device does not include direct connection between said driving and driven shafts and over-driving operation as generally used in motorization systems.

An object of this invention is to provide a torque trans mission device with a hydraulic assembly for variable speed control improved to be assembled with a simple construction as the whole.

A second object of this invention is to provide a torque transmission device with a hydraulic assembly for variable speed control improved to include a direct connection between driving and driven members as well as over-driving operation.

A third object of this invention is to provide a torque transmission device with a hydraulic assembly for variable speed control improved to arrange driving and driven members with they being co-axial to each other togerther with hydraulic control means.

A fourth object of this invention is to provide a torque transmission device with a hydraulic assembly for variable speed control improved to supply fluid under a prescribed pressure to hydraulic assembly.

In an aspect of this invention, there is provided with a torque transmission device with a hydraulic assembly for variable speed control comprising an input rotor having pump-driving means, an output rotor having pump-driven means, either one of said rotors including an inlet port receiving fluid to be pumped and an outlet port delivering said fluid pumped, said pump-driving means operating said pump-driven means by mutual differential rotation between said rotors so as to cause said fluid to be pumped, a control rotor, and a stator, either one of said control rotor and stator having flow-control means, and the other having flow-return means which is operated by said flow-control means, said flow-control means including a secondary inlet port communicated with said outlet port mentioned above so as to receive said fluid through a first passage and a secondary outlet port communicated with said inlet port mentioned above so as to deliver said fluid through a second passage, said flow-control means including means for regulating amounts of pumping per a rotation of said control rotor which integrally rotates with either one of said input and output rotors.

The other features and advantages of this invention will be apparently described herein after with reference to the accompany drawings as follows.

Fig. 1 is a vertical cross section of a torque transmission device with a hydraulic assembly embodying this invention;

Figs. 2 to 5 are cross sections which are indicated by lines from II - II to V - V on Fig. 1;

Fig. 6 is a vertical cross section of part of said device which is illustrated under a condition for control operation;

Fig. 7 is an end view of an adjustable swash plate included in said device;

Fig. 8 is a vertical cross section of the modification of said torque transmission device from that of Figs. 1 to 7;

Fig. 9 is a cross section which is indicated by a line of IX - IX on Fig. 8;

Fig. 10 is a vertical cross section of a second embodiment of this invention;

Figs. 11 and 12 are cross sections which are indicated by lines of XI - XI and XII - XII on Fig. 10;

Fig. 13 is a vertical cross section of a third embodiment of this invention;

Figs. 14 and 15 are cross sections which are indicated by lines of XIV - XIV and XV - XV on Fig. 13;

Fig. 16 is a vertical cross section of part of said device which is illustrated under a condition for control operation;

Fig. 17 is an end view of an adjustable swash plate included in said device of said third embodiment;

Fig. 18 is a vertical cross section of the modification of said torque transmission device of said third embodiment;

Fig. 19 is a vertical cross section of a fouth embodiment pf this invention;

Fig. 20 is a cross section which is indicated by a line of XX - XX on Fig. 19;

Fig. 21 is a vertical cross section of a fifth embodiment of this invention;

Fig. 22 is a cross section which is indicated by a line of XXII - XXII on Fig. 21;

Fig. 23 is a vertical cross section of a sixth embodiment of this invention;

Fig. 24 is a cross section which is indicated by a line of XXIV - XXIV on Fig. 23;

Fig. 25 is a vertical cross section of a seventh embodiment of this invention;

Fig. 26 is a cross setion which is indicated by a line of XXVI - XXVI on Fig. 26; and

Fig. 27 is an end view of means for regulating fluid flow with gear trains adapted to said seventh embodiment.

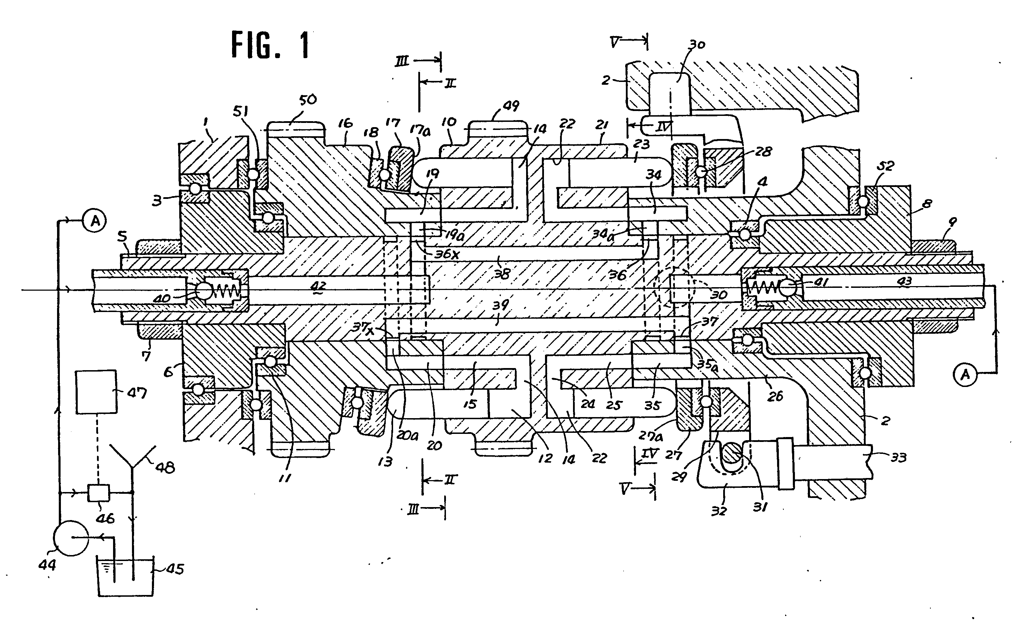

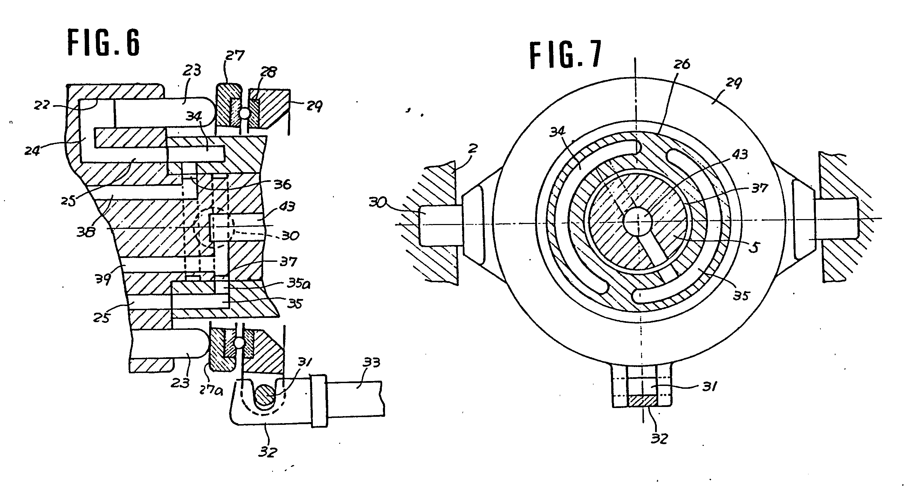

A torque transmission device with a hydraulic assembly for variable speed control of this invention is illustrated in Figs. 1 to 7 as a first embodiment. In said embodiment, said device comprises a rotary shaft 5 journalled to radial bearings 3 and 4 through sleeves 6 and 8 which are fixedly set to said rotary shaft 5 by means of stop nuts 7 and 9 screwed to said shaft 5, said bearings being supported to frames 1 and 2 of said device.

Said device further comprises an input rotor 10 integrally formed to said rotary shaft 5 and having pump-driving means mentioned hereinafter, and an output rotor 16 rotatably supported to said rotary shaft 5 through a radial bearing 11 and having pump-driven means mentioned hereinafter.

Said pump-driven means comprises a swash plate 17 rotatably supported to a rotor body included in said output rotor 16, through a bearing 18 attached to said rotor body with a prescribed inclination defined to the axis of said output rotor, and having a guide surface 17a formed to said inclination. Said swash plate 17 may be integrally formed to said rotor body with its guide surface keeping said inclination. Said rotor body has its end in which inlet and outlet ports 19 and 20 are positioned to both sides of said inclination with their ports being formed into half-circular grooves respectively.

Said pump-driving means comprises a plurality of cylinder bores 12 formed to one end of said input rotor 10 in opposite to that of said output rotor 16 in a manner to be equally spaced on a prescribed pitch circle co-axial to that of said input rotor, to which said inlet and outlet ports 19 and 20 are tightly faced, a plurality of plunger members 13 slidably inserted into said cylinder bores 12 respectively in a manner to be guided by said swash plate 17, and a plurality of through bores 15 passing through radial pathes 14 to said cylinder bores 12 so as to communicate said cylinder bores 12 orderly with said inlet and outlet ports 19 and 20 opposite to the through bores 15 when said input and output rotors 10 and 16 are differentially rotated with each other. Preferably, said half-circular grooves are formed co-axially to the axis of the rotor, and said through bores 15 are formed to a pitch circle tracing to said grooves.

In this embodiment, said output rotor is supported to the frame 1 through a trust bearing 51 and said swash plate 17 is slidably attached to the free ends of said plunger members 13 due to fluid pressure supplied to said cylinder bores 12. However, in another aspect of this embodiment, said swash plate 17 may be provided with couplers such as Caldarn couplers well known in the prior arts, which are pivotally connected to the free ends of said plunger members 13 respectively.

Furthermore, in this embodiment, said inlet and outlet ports 19 and 20 are individually communicated via radial pathes 19a and 20a with annular grooves 36x and 37x which are formed to the periphery of said rotary shaft 5 in a manner to be arranged to the axis of said rotary shaft 5. Said grooves 36x and 37x are individually communicated via radial pathes with second and first passages 38 and 39 respectively, said passages being formed to said rotary shaft 5 in parallel to its lengthwise direction.

In addition, said input and output rotors 10 and 16 have input and output gears 49 and 50 integrally formed on the peripheries of said rotors respectively in this embodiment.

Said torque transmission device of this invention further comprises a stator 26 having flow-control means mentioned here inafter and a control rotor 21 having flow-return means which is operated by said flow-control means. Said flow-control means includes a secondary inlet port 35 communicated with said outlet port 20 so as to receive said fluid through said first passage 39 and a secondary outlet port 34 communicated with said inlet port 19 so as to deliver said fluid through a second passage 38. In detail, said secondary outlet and inlet ports 34 and 35 are communicated via radial pathes 34a and 35a with annular grooves 36 and 37 which are formed on the periphery of said rotary shaft 5 so as to be arranged to the axis thereof. Said grooves 36 and 37 are individually communicated via radial pathes with said second and first passages 38 and 39 respectively. Said flow-control means in this embodiment further includes an adjustable swash plate 27 having a guide surface 27a and disposed to one end thereof in which said secondary inlet and outlet ports 34 and 35 are positioned to both sides of inclination of said swash plate 27. Said swash plate 27 is supported to a support disc 29 through a thrust bearings 28 and said support disc 29 has two pivot members 30 journalled to said frame 2 at both sides of said swash plate 27. In another aspect of this embodiment, said swash plate 27 may be integrally formed to said support disc 29 so as to obtain a simple form. Furthermore, said flow-control means includes means for regulating the inclination angle of said swash plate 27. Said regulating means in this embodiment, comprises a control rod 33 slidably supported to said frame 2 and having a guide fork 32, and actuator (not shown) for moving said control rod 33 in a direction parallel to the axis of said rotary shaft 5 and gripping said control rod 33 at a selected position. Said support disc 29 has a control pin 31 which is disposed to lower side thereof in a manner to extend to a direction perpendicular to the axis of said rotary shaft 5, so that said control pin 31 is engaged with said control rod 33 so as to cause said swash plate 27 to be inclined at a selected angle around the axis of said pivot member 30 by the motion of said control rod 33.

Said flow-return means in this embodiment, comprises a plurality of cylinder bores 22 formed to one end of said control rotor 21 in opposite to said swash plate 27 in a manner to be equally spaced on a prescribed pitch circle co-axial to that of said rotor 21, a plurality of plunger members 23 slidably inserted into the cylinder bores 22 respectively in a manner to be guided by said swash plate 27, and a plurality of through bores 25 communicating via radial pathes 24 with said cylinder bores 22 and adapted to communicate said cylinder bores 22 orderly with said secondary inlet and outlet ports 35 and 34 opposite to the through bores 25 when said control rotor 21 is rotateds. And then said secondary inlet and outlet ports 35 and 34 are tightly faced to one end surface of said rotor 21 to which said through bores 25 are opened.

In the other aspect of this embodiment, said plunger members 23 may be provided with their free ends being connected to said swash plate 27 through couplers such as Caldarn couplers and the like.

Said torque transmission device according to this invention includes means for supplying fluid such as an oil and the like individually to said first and second passages 39 and 38 so as to maintain the fluid pressures at prescribed values. In this embodiment, said supplying means includes a pump system having a pump 44 driven by a motor (not shown ), a pressure control valve 46 which is regulated by means of control unit 47, and two one-way valves 40 and 41 for preventing the supplied fluids to be returned to the delivery port of said pump 44 from said second and first passages 38 and 39. Therefor, said one-way valves 40 and 41 are disposed to passages 42 and 43 formed to the interior of said rotary shaft 5, said passages 42 and 43 being individually communicated with the second and first passages 38 and 39.

In this embodiment, there are further provided with a tank 45 as a fluid source, and an oil pan 48 for receiving and accumlating the fluid leakage from said torque transmission device so as to feed the fluid back to said tank 45. Preferably, means for oil sealing to necessary portions of said device may be adapted, for example, to clearances existing between the inner peripheries of said cylinder bores 12 or 22 and the outer peripheries of said plunger members 13 or 23. As well as between the opposite surfaces of said input and output rotors 10 and 16 through which said through bores 15 are communicated with said inlet and outlet ports 19 and 20. Similary, it may be prefered a sealing between the opposite surfaces of said control rotor 21 and stator 26, through which said through bores are communicated with said inlet and outlet ports 35 and 34.

It is important to consider that such fluid circuit of this torque transmission device are alway filled by the fluid so as to obtain a smooth starting operation. Accordingly, there may be provided with suitable means well known in the prior arts in order to obtain such condition.

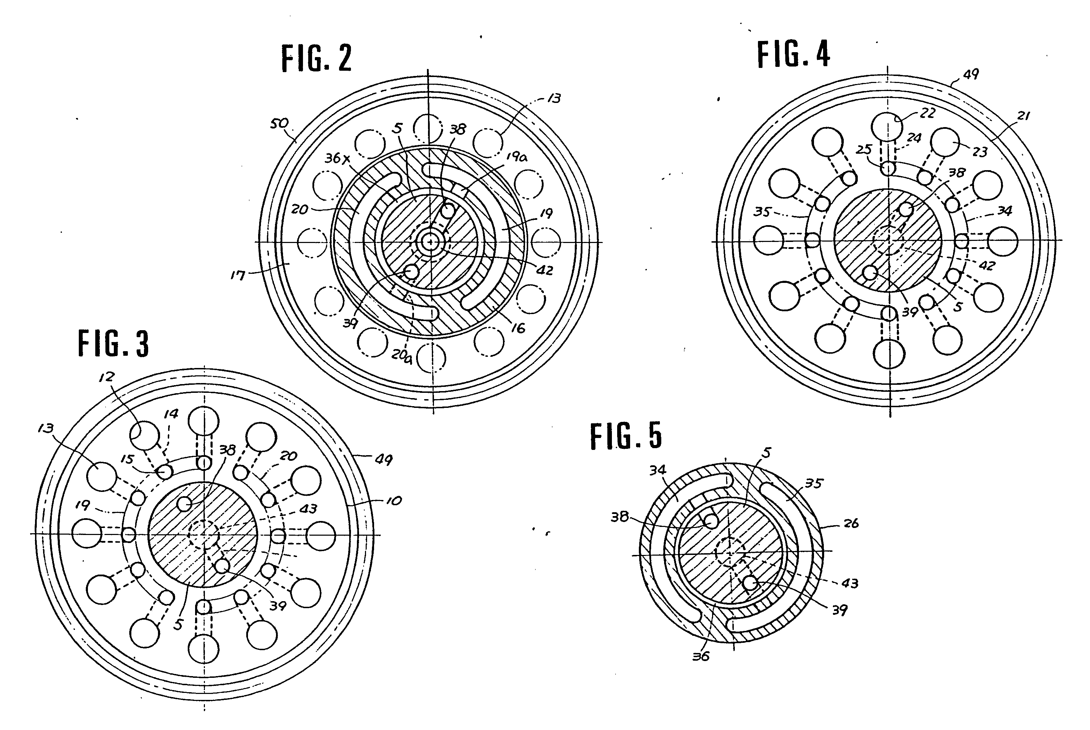

Firstly, as said pump 44 is driven, said fluid passages 39 and 38 are maintained at minimum pressures determined by said pressure control valve 46. In this condition, as torque power is applied to said input rotor 10 as a revolution with said gear 49 driven by a driving gear (not shown) intermeshed thereto. And then said input rotor 10 is rotated, for instance, in a clockwise direction in Figs. 2 and 4, so that said pump-driving means transmits the torque to said pump-driven means as two separated powers, one of which is applied to said output rotor 16 dynamically, and the other of which is applied to the pumping operation generated by means of said plunger members 13 reciprocated in said cylinder bores 12 as their free ends trace on the guide surface 17a of said swash plate 17. Accordingly, the fluid in the cylinder bores positioned at one side at which half numbers of said plunger members 13 are pushed by said swash plate 17, flows out from said through bores 15 to said outlet port 20, and the fluid in the cylinder bores positioned at other side at which the remain half numbers of said plunger members 13 are protruded toward said swash plate 17, pull up surplus through said through bores 15 from said inlet port 19.

On other hand, an amount of pumped fluid is determined by the inclination angle of said adjustable swash plate 27 and by the rotation of said control rotor 21. Namely, the pumping operation between said flow control means and flow return means definitely manages the amount of pumped fluid, wherein as the free ends of said plunger members 23 trace on the guide surface 27a of said swash plate 27 by the rotation of said control rotor 21 which is simultaneously rotated togerther with said input rotor 10 in this embodiment, said plunger members 23 are reciprocated in said cylinder bores 22 by the guide of said swash plate 27. In this case, an amount of fluid flowing out from said outlet port 34 to said second passage 38 is the same as that of the fluid sucked to said inlet port 19, and an amount of fluid pull up in said inlet port 35 is the same as that of the fluid pushed out from said outlet port 20 to said first passage 39.

In order to understand with ease the variable speed control of said torque transmission device according to this invention, it suppose that the delivery amount of fluid at said outlet port 20 for one rotation of said input rotor 10 relative to said output rotor 16 is the same as that of fluid at said outlet port 34 for one rotation of said control rotor 21 relative to said stator 26 in the case where the inclined angles of said swash plates 17 and 27 are identified with each other.

If said output rotor 16 can be rotated for (r) r.p.m as said input rotor 10 is rotated for (R) r.p.m., said differential rotation (R-r) between said rotors 10 and 16 is dispensed for pumping operation between said pump-driving means and pump-driven means, wherein the delivery amount of fluid under said pumping operation is defined as (Q). If (r) = 0, i.e., said output rotor 16 is not rotated, the delivery amount of fluid is determined as (Qx) only by the rotation of the input rotor 10. Namely, it is defined as next formula.

$$Q = Qx ( R - r ) / R$$

On the other hand, said control rotor 21 is rotated with said input rotor 10 and the delivery amount of fluid under pumping operation between said flow-control means and flow-return means is determined as $(Q')$ by the inclined angle of said adjustable swash plate 27. If it supposes that a coefficient (k) is defined as a ratio between the inclined angles of said swash plate 17 and 27, the next formula is held.

$$Q' = k \cdot Qx \text{ but } Q' = Q = Qx ( R - r ) / R,$$
$$\text{then } k \cdot Qx = Qx ( R - r ) / R,$$
$$k = ( R - r ) / R$$

If k = 1 i.e., $Q' = Qx$ then r = 0 and if k = 0 i.e., $Q' = Q = 0$ then r = R, as well as if 0<k<1 then R>r>0. If it is necessary to obtain the over-drive to said output rotor 16, the coeffecient should be defined as k<0, and the coeffecient for a reverse rotation of the output rotor 16 should be defined as k>1.

Accordingly, the determined inclination of said adjustable swash plate 27 manages a suitable speed ratio between said input and output rotors 10 and 16 when said control rod 33 is regulated by the actuator's operation.

In a modification of this invention, input and output relation between rotors 10 and 16 may be reversed so that said rotor 16 receives torque power as an input rotor with said gear 50 being driven by a driving gear (not shown ), and said rotor 10 take out torque power as an output rotor wherein said torque power hold a suitable speed varied by said torque transmission device. In this case, said rotor 16 includes pump-driving means which comprises a swash plate 17 with a guide plate 17a, and inlet and outlet ports 19 and 20, and said rotor 10 includes pump-driven means which comprises a plurality of cylinder bores 12, a plurality of plunger members 13 and plurality of through bores 15 which are already described in the first embodiment.

In this modification, said swash plate 17 forcedly guides said plunger members 13 so as to be reciprocated in said cylinder bores 12 for pumping operation, when said rotor 16 is rotated. In this case, a coefficient $(k')$ is different from the coefficient (k) defined in the first embodiment. Namely, said control rotor 21 is not rotated togerther with said input rotor 16 but also rotated togerther with said output rotor 10 ( which is indicated as an input rotor 10 in the first embodiment ). Accordingly, the coeffecient $(k')$ is defined as follows.

$$k' = ( R - r ) \cdot k \text{ and then } k' = ( R - r ) / r$$

If $k' = 1$ then r = R/2 i.e., the rotation of said output rotor 10 is a half of that of said input rotor 16, and if $k' = 0$ then r = R i.e., said output and input rotors 10 and 16 are directly coupled to each other. Similarly, if $0<k'<1$ then R/2<r<R i.e., said output rotor 10 is held with a decreased rotation as compared to that of said input rotor 16. Furthermore, if $-1<k'<0$ then r>R wherein said output rotor 10 is over-driven, and if $k'>1$ then said output rotor 10 is held with a more-decreased rotation such as R/3, R/4 and the like.

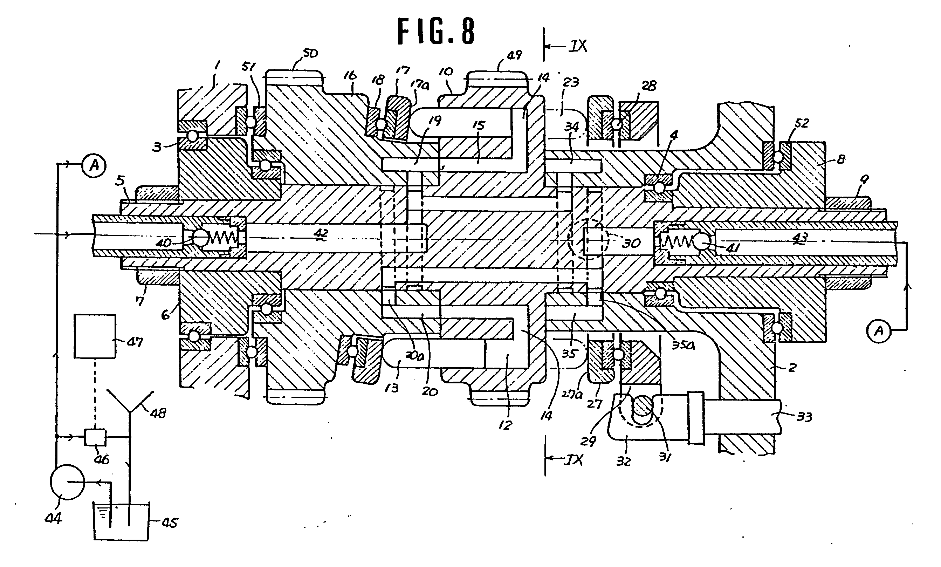

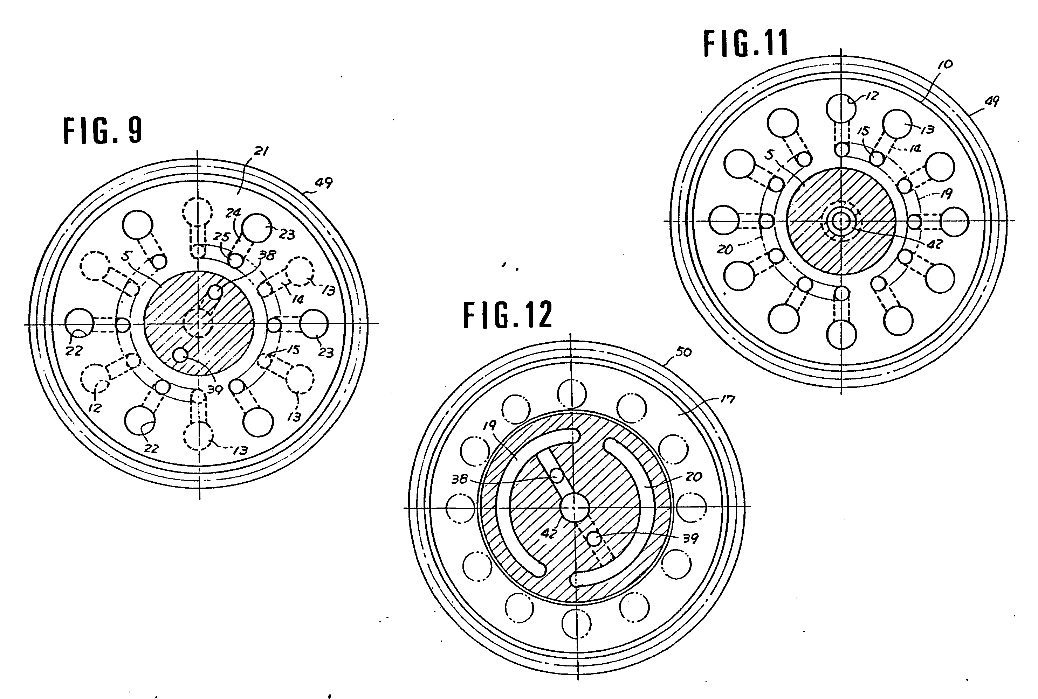

In order to compact said torque transmission device in the first embodiment, two groups of said cylinder bores 12 and 22 with said plunger members 13 and 23 may be modified as being illustrated in Figs. 8 and 9 wherein the respective bore of said groups are alternately arranged in a common pitch circle but opened opposite ends of a rotor body used to both rotors 10 and 21.

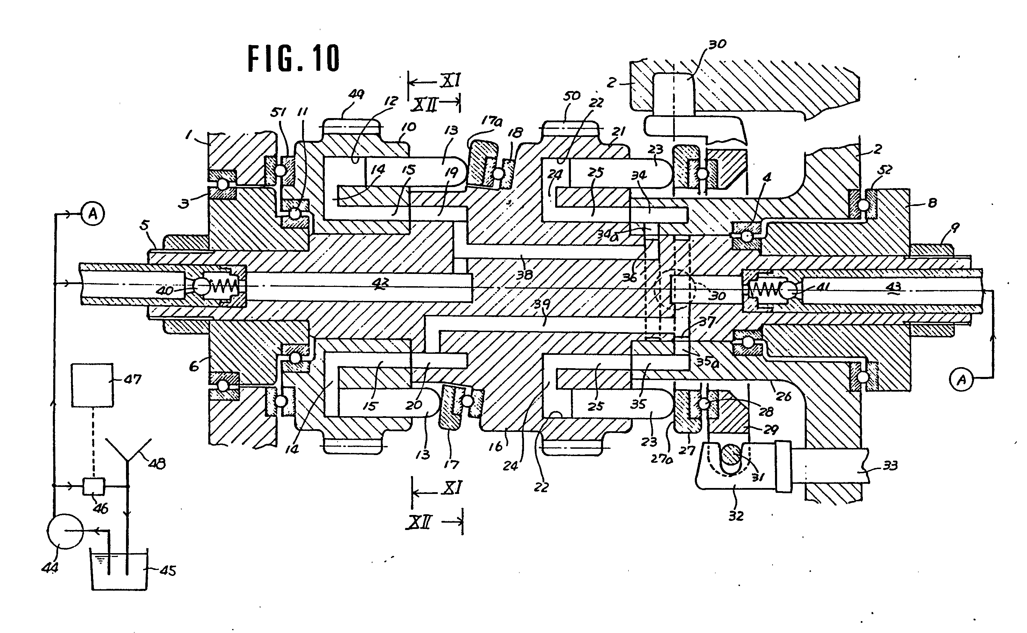

A second embodiment of this invention is illustrated in Figs. 10 to 12 wherein an output rotor 16 is integrally formed to a control rotor 21 and includes pump-driven means having a swash plate 17 and inlet and outlet ports 20 and 19 ( as defined by the reverse reference numbers in the first embodiment) which are individualy communicated with passages 39 and 38, and an input rotor 10 is independently rotated and includes pump-driving means comprising the same comporents as that in the first embodiment ( which are illustrated in Figs. 10 to 12 by the same reference numbers ). In this case, a port 34 included in flow-control means of a stator 26 is adapted to receive the fluid as an inlet port, and a port 35 included therein is adapted to delive the fluid as an outlet port.

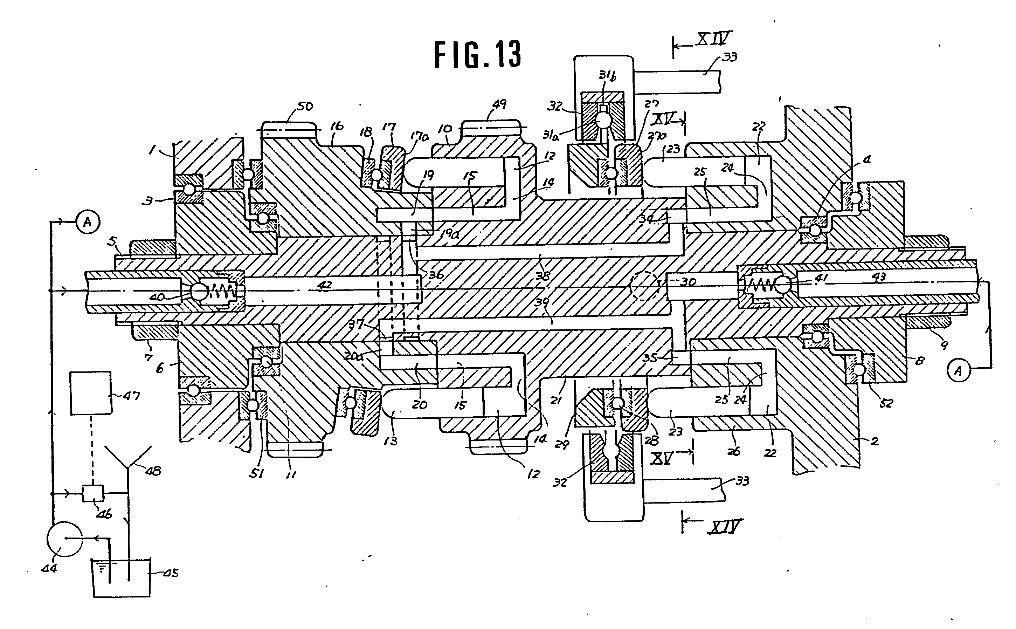

In this embodiment, said input rotor 10 is rotated in a clockwise direction in Fig. 11 and the differential rotation between said input and output rotors 10 and 16 is determined due to the coefficient (k') defined in the modification of the first embodiment.

The second embodiment may be modified so that the rotor 10 is adapted to an output rotor and the rotor 16 is adapted to an input rotor. In this case, said rotor 10 has pump-driven means and said rotor 16 has pump-driving means, said pump-driven and pump-driving means each including the reverse comporents as that of said second embodiment ( though any comporents are not exchanged in the drawings ) with another representation on functional idea. The coefficient used in this modification is defined by (k) of the first embodiment.

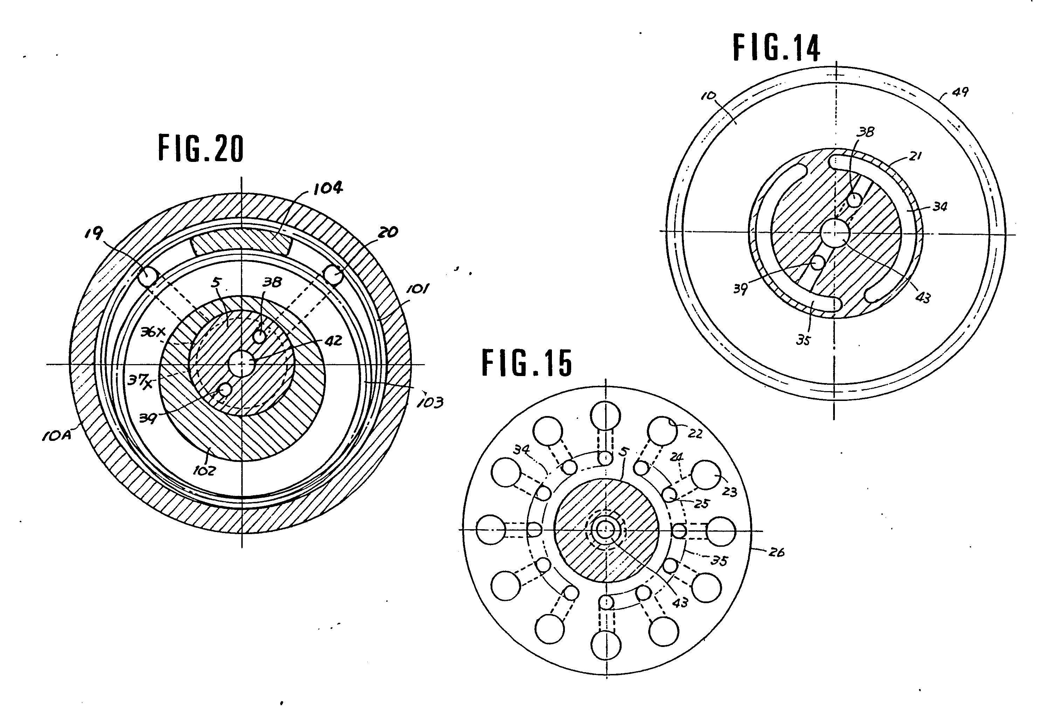

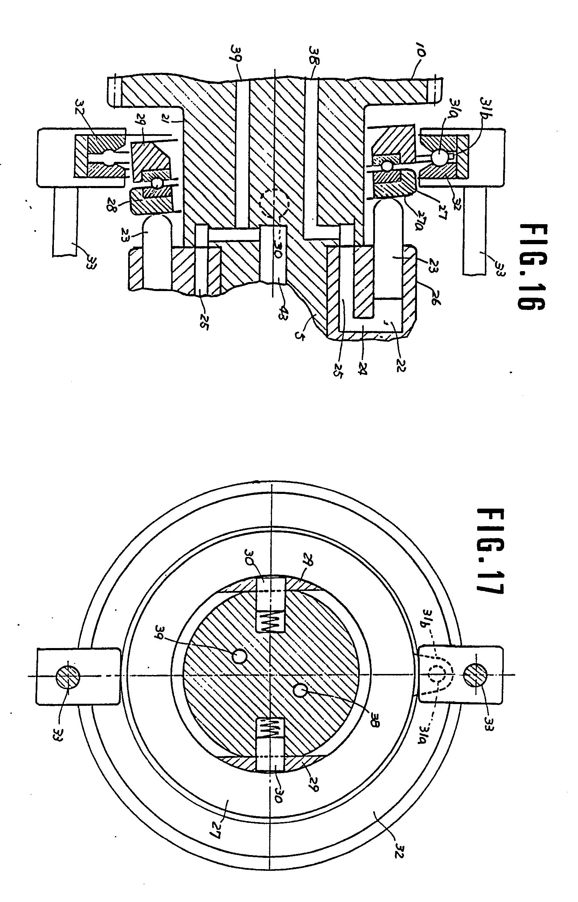

The third embodiment of this invention is illustrated in Figs. 13 to 17 wherein a control rotor 21 includes flow-control means comprising a secondary port 35 communicated with an outlet port 20 formed to the body of a rotor 16 and a secondary port 34 communicated with an inlet port 19, and a stator 26 includes flow-return means comprising a plurality of cylinder bores 22 formed to one end of said stator 26, a plurality of plunger members 23 slidably inserted into said cylinder bores 22, and a plurality of through bores 25 communicating with said cylinder bores 22 and adapted to communicate said cylinder bores 22 orderly with said secondary ports 35 and 34 opposite to the through bores 25 when said control rotor 21 is rotated. In this embodiment, said flow-control means further includes a swash plate 27 having a guide surface 27a so that said secondary ports 35 and 34 are positioned to both sides of inclination of said swash plate 27. Furthermore, said flow-control means includes means for regulating the inclination angle of said swash plate 27. In this embodiment, said swash plate 27 is supported to a support disc 29 through a thrust bearing 28 and said support disc 29 has two pivot members 30 journalled to the body of said control rotor 21 at both sides of said swash plate 27, and then said regulating means comprises control rods 33 slidably supported to a frame and having a guide ring 32 with a circular groove, and an actuator (not shown) for moving said control rods 33 in a direction parallel to the axis of a rotary shaft 5 and gripping said control rods at a selected position. Said support disc 29 has an arm 31b with a ball 31a inserted into and guided by said circular groove of said guide ring 32.

The other comporents of the third embodiment are approximately identified to them of the first embodiment, thereby to eliminate the detailed explanation of the components only with the reference numbers being illustrated in the drawings. In this embodiment, the inclination of said adjustable swash plate 27 is controlled in the reverse direction to that of a swash plate 17, and the coefficient (k') is adapted when an rotor 16 is used as an input rotor, and the coeffecient (k) is adapted when an rotor 10 is used as an input rotor.

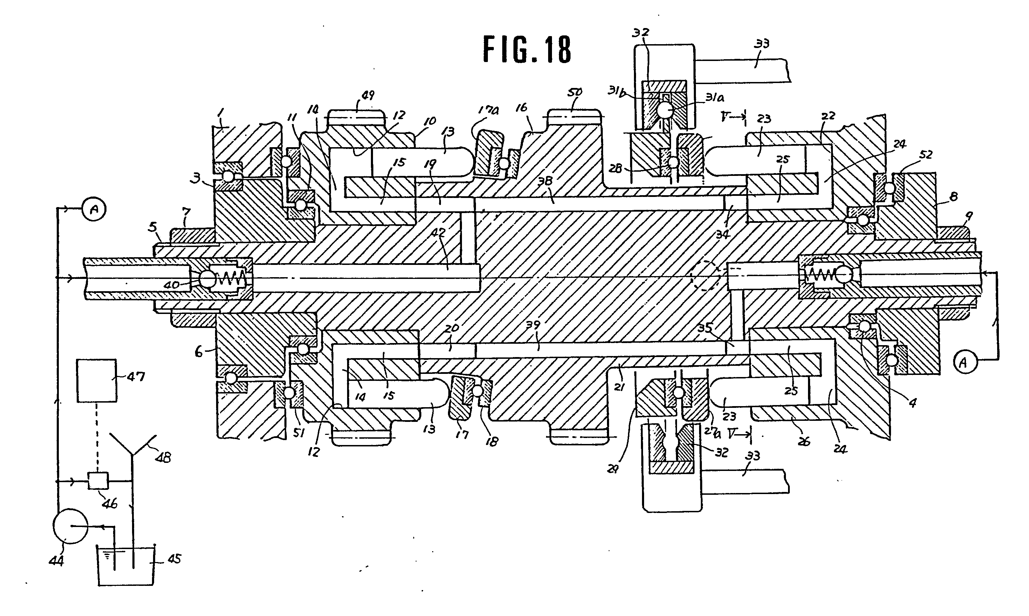

The modification of the third embodiment is illustrated in Fig. 18 wherein the left-half portion of the drawing is identified to that of Fig. 10, namely, the modification is accomplished with the power transmission area in the second embodiment being assembled to the control area in the third embodiment. Accordingly, it will be apparently understood the construction and function of the torque transmission device in this embodiment without the detailed explanation.

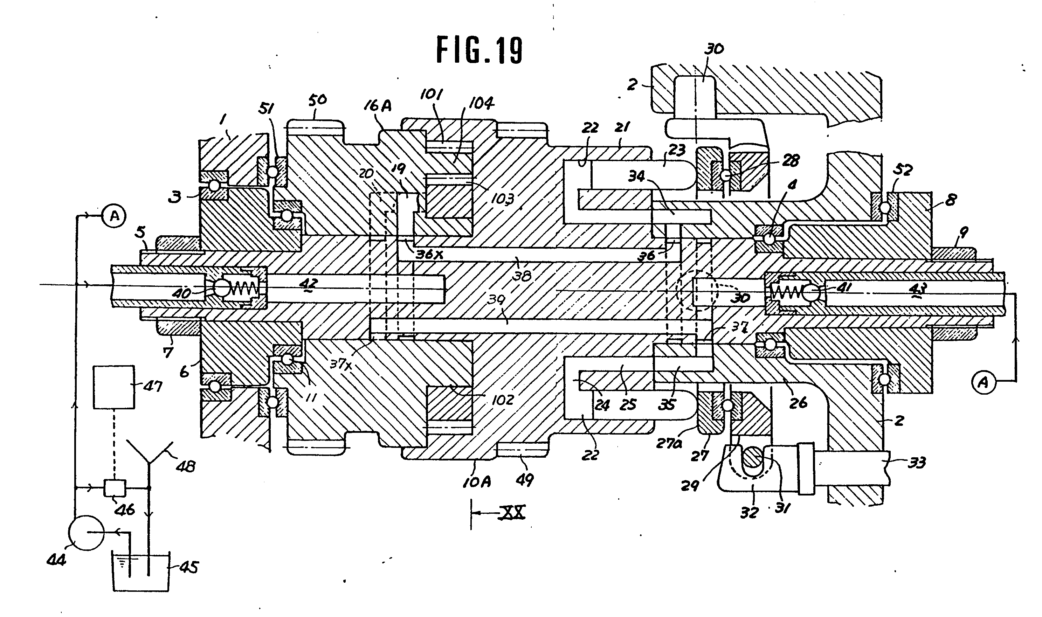

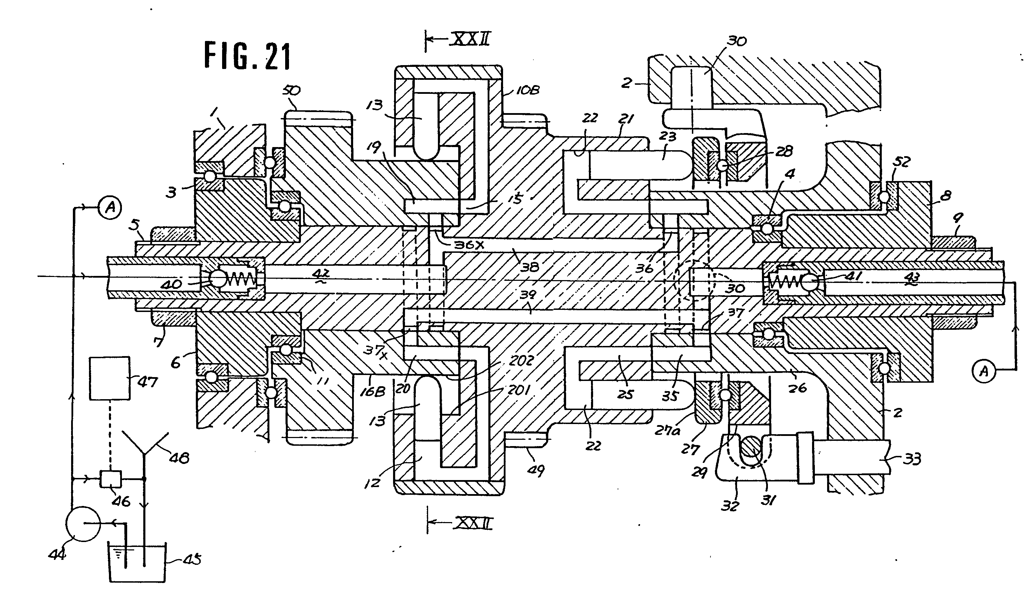

The fourth embodiment of this invention illustrated in Figs. 19 and 20 includes an input rotor 10A having an internal gear 101 as a pump-driving means, and an output rotor 16A having pump-driven means. Said pump-driven means comprises a rotor body 102, a planet gear 103 rotatably supported to said rotor body 102 in a manner to be eccentrically disposed to the axis of said rotor body 102, said rotor body including an inlet and outlet ports 19 and 20 formed thereto at both sides of said planet gear 103, and a partition 104 separating two chambers 105 and 106 communicated with said inlet and outlet ports 19 and 20 by a space surrounded by said internal gear 101. Said internal and planet gears 101 and 103 are mutually intermeshed so as to cause fluid in said chambers to be pumped when said input and output rotors 10A and 16A are differentially rotated with each other. Such a pumping mechanism has been well known in the prior arts, though the internal gear is not rotatable but also set in a static position in the prior case.

As illustration in the first embodiment, an control rotor 21 is also integrally formed to said input rotor 10A, and a stator 26, as that adapted to the first embodiment, includes an adjustable swash plate 27 with its guide surface 27a supported to a support disc 29 through a bearing 28 and outlet and inlet ports 34 and 35 communicated through passages 38 and 39 with said inlet and outlet ports 19 and 20. Said control rotor 21 includes a plurality of cylinder bores 22, a plurality of plunger members 23 and a plurality of through bores 25 through which said cylinder bores 22 are communicated orderly with said outlet and inlet ports 34 and 35.

In order to understand with ease the power transmission in this embodiment, it suppose three conditions mentioned hereinafter. Namely, under an extreme condition wherein the fluid to be pumped is held with no or rare flowing resistance since said adjustable swash plate 27 is turned by means of pivot pins 30 to a vain inclination angle, said planet gear 103 is rotated to an eccentirc axis set to said output rotor 16A which yet is not rotated, though the rotating torque applied to said input rotor 10A is operated to the gear pump mechanism constituted by both pump-driving and pump-driven means mentioned above.

Under the other extreme condition wherein the fluid to be pumped is held with an enormous flowing resistance since said adjustable swash plate 27 is set to no or stern inclination, i.e., perpendicular to the axis of a rotary shaft 5, said planet gear 103 is carried on a circle defined by an eccentric radius with its teeth intermished to that of said internal gear 101 in no rotating condition, so as substantially to transmit the same rotation as that of said input rotor 10A to said output rotor 16A.

Under an intermediate condition in which the fluid to be pumped is held with a suitable flowing resistance caused by a regulated inclination of said adjustalbe swash plate 27, the differential rotation is generated between said input and output rotors 10A and 16A, wherein said internal and planet gears 101 and 103 are mutually rotated for pumping operation, and said planet gear 103 is carried behind said internal gear 101 by a delayed running. Therefor, the torque transmission device of the fourth embodiment can be completely operated to obtain a varied speed control.

The use of the fourth embodiment may be so modified as to exchange the functions of both rotors 10A and 16A togerther with said pump-driving and pump-driven means in reverse use wherein said rotor 10A is adapted to an output rotor and said rotor 16A to an input rotor.

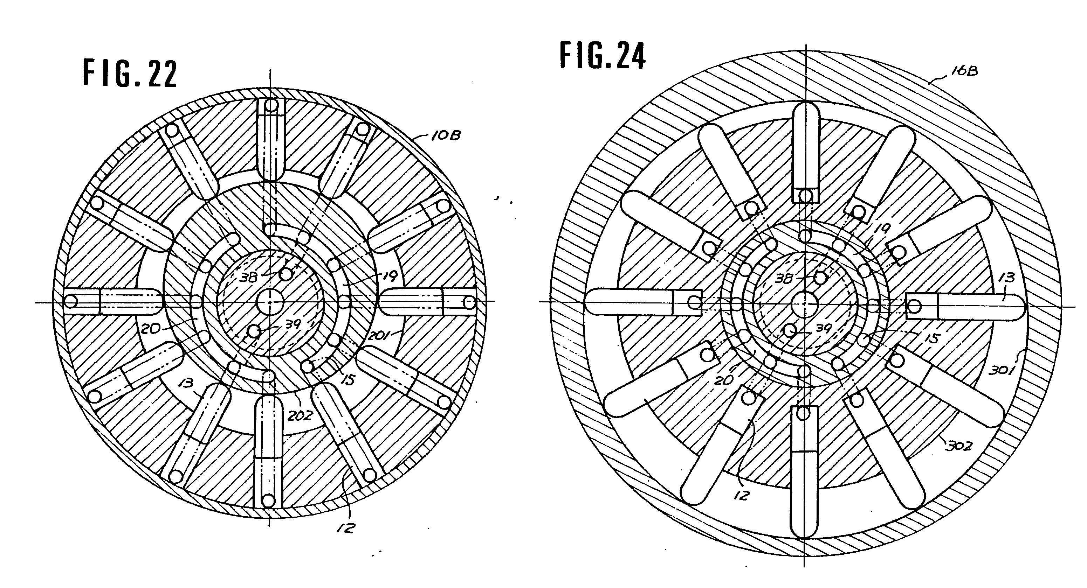

Figs. 21 and 22 illustrate a torque transmission device of this invention as a fifth embodiment. The feature this embodiment as compared to the first embodiment is to provide plunger members arranged in a radial direction and an eccentric ring member prepared instead of the swash plate mentioned above. Namely, in the embodiment, an input rotor 108 includes pump-driving means which comprises an outer ring member 201, and an output rotor 16B includes pump-driven means which comprises an inner ring member 202 disposed eccentrical to the axis of said output rotor 16B in a manner to be positioned opposite to said outer ring member 201 approximately in a radial direction and inlet and outlet ports 19 and 20 disposed at both sides of eccentricity of said inner ring member 202. Said outer ring member 201 is integrally formed to said input rotor 10B and has a plurality of cylinder bores 12 equally spaced on a prescribed pitch circle co-axial to that of the corresponding rotor 10B and extending in a radial direction respectively, a plurality of plunger members 13 slidably inserted into said cylinder bores 12 respectively in a manner to be slidably guided by said eccentric ring member 202, and a plurality of through bores 15 for communicating said cylinder bores orderly with said inlet and outlet ports opposite to said through bores 15 when said input and output rotors 10B and 16B differentially rotated with each other.

The many compornents in the control area of the fifth embodiment such as a control rotor 21, a stator 26, flow-control means with a swash plate 27, secondary outlet and inlet ports 34 and 35, flow-return means including cylinder bores 22, plunger members 23 and through bores 25, and the other compornents are substantially identified to them described in the first embodiment. Accordingly, the explanation to said control area and portions relative thereto is eliminated in this description.

Similarly, the function of the device in the fifth embodiment will be fully understood and surmised by the illustration of Figs. 21 and 22 and the detailed description about the first embodiment.

The partial portions of said device in the fifth embodiment can be functionally modified as follows. Namely, in this case said rotor 10B may be used as an output rotor and said rotor 16B to an input rotor in reverse use. In accordance with the functional exchange of said rotors, said pump-driving and pump-driven means should be stiuated in a reverse function.

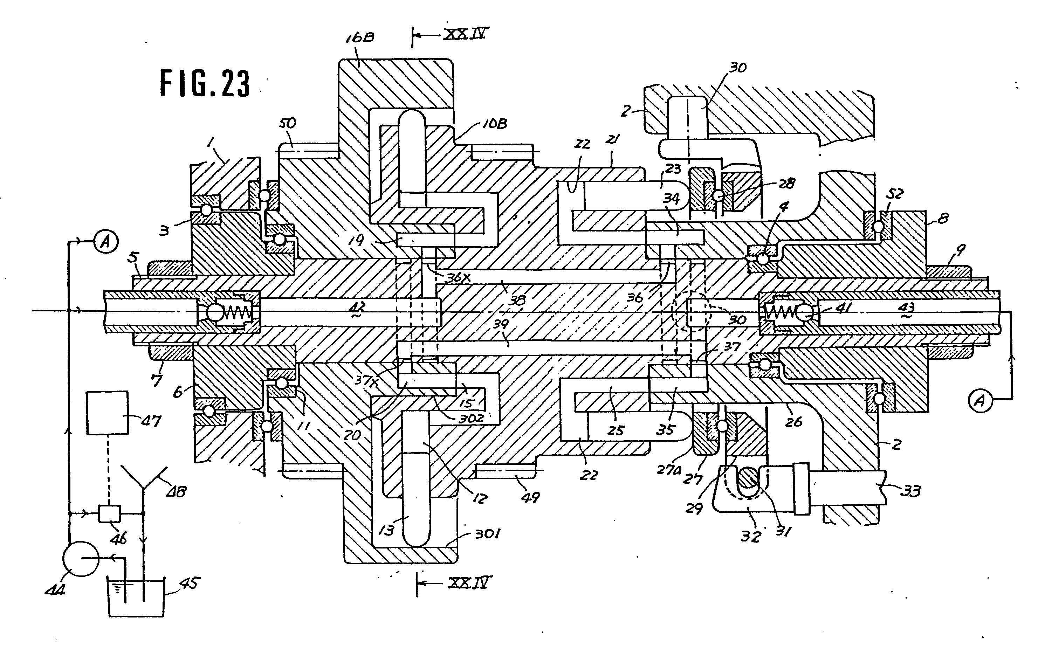

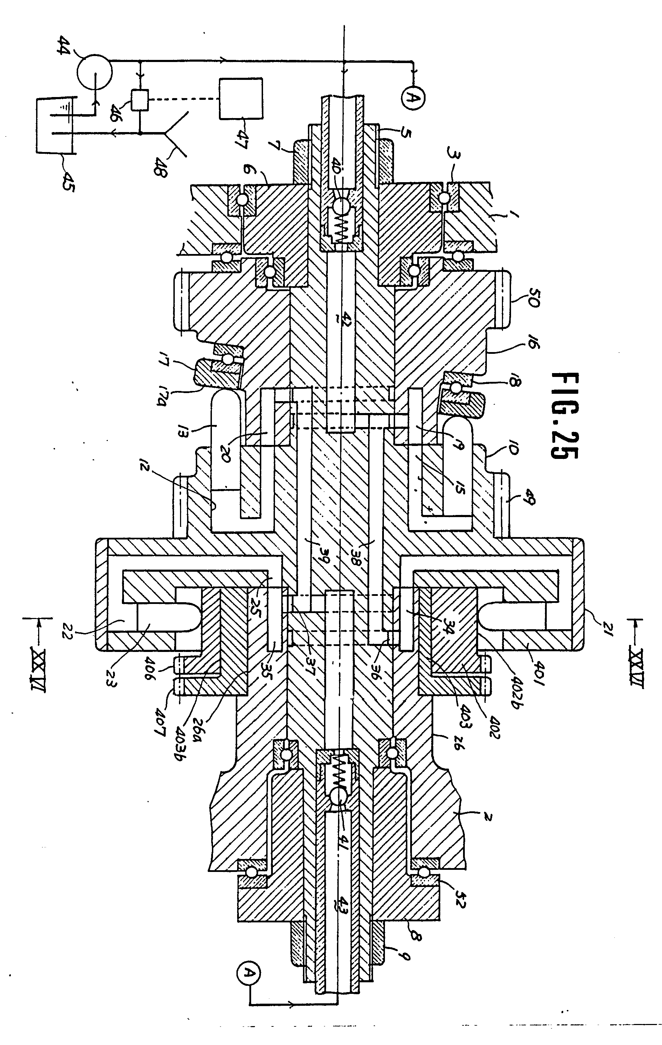

The sixth embodiment of this invention as illustrated in Figs. 23 and 24 is a modification from the fifth embodiment. In this case, an eccentric ring member is an outer ring member 301 which is applied to an output rotor 16B as pump-driving means togerther with inlet and outlet ports 19 and 20, and an inner ring member 302 is applied to an input rotor 10B as pump-driven means which comprises a plurality of cylinder bores 12 equally spaced on a prescribed pitch circle co-axial to the corresponding rotor 10B in a manner to extend to a radial direction respectively, a plurality of plunger members 13 slidably inserted into said cylinder bores 12, a plurality of through bores 15 for communicating said cylinder bores 12 orderly with said inlet and outlet ports opposite to said through bores 15. The other compornents are the same as them of said device in the fifth embodiment as apparently shown in the drawing.

Each of the particular portions of said assemblies in the fourth, fifth and sixth embodiments can be applied to either one of the corresponding assemblies in the first, second and third embodiments.

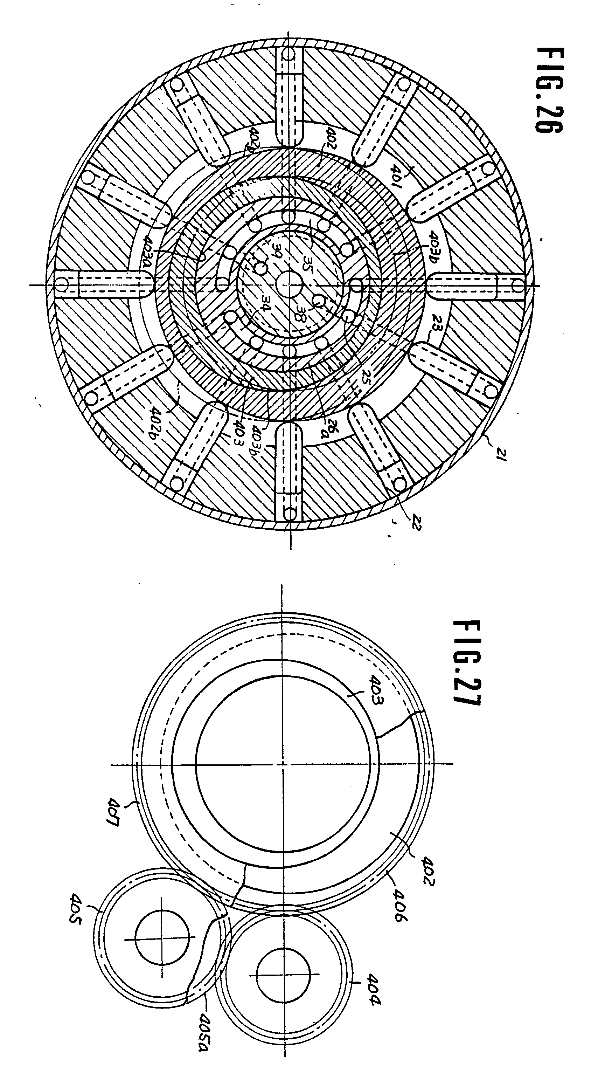

The final embodiment of this invention illustrated in Figs. 25 to 27 is applied to the control area of the torque transmission device. Namely, a control rotor 21 includes an outer ring member 401 as flow-return means with its inner periphery being co-axial to the axis of said control rotor, and has a plurality of cylinder bores 22 equally spaced on a prescribed pitch circle co-axial to the rotor axis to extend to a radial direction respectively, a plurality of plunger members 23 slidably inserted into said cylinder bores 22 respectively, and a plurality of through bores 25. And then a stator 26 includes an inner ring member 402 by which said plunger member 23 are guided to a radial direction and having an inner periphery 402a formed on a circle described at a center eccentrical to said inner ring member 402, a control ring member 403 adapted to regulate an eccentric distance to which the outer periphery 402b of said inner ring member is settled.

Said control ring member 403 has an inner periphery 403a rotatably slided to a journal portion 26a formed to the stator 26 and eccentric to the rotor axis, and an outer periphery 403b formed on a circle described at a center eccentrical to the axis of its inner periphery 403a. Then said control ring member 403 is rotatably inserted into a hollow portion surrounded by said inner periphery 402a. Under such condition that the eccentric centers of both ring members 402 and 403 are set at positions opposite to the center of the stator journal portion.

The rotating motions of said inner ring member 402 and control ring member 403 on said journal portion 26a are mutually restricted by means of gear trains. Said gear trains include a control gear 404 to be manually or mechanically turned, counter gears 405 and 405a, the later being intermeshed to said control gear 404, and two driven gears 406 and 407, one of which is integrally formed or mounted on the end portion of the inner ring member 402 and intermeshed to said control gear 404, and the other of which is integrally formed to or mounted on the end portion of the control ring member 402 and intermeshed to said counter gear 405. By such gear trains, the inner ring member 402 and control ring member 403 are rotated for the same rotation in reverse directions, whereby the center of the output periphery 402b of said inner ring member 402 can be shifted so as to trace along a straight line across the center of the journal axis. Accordingly, as the inner ring member 402 is regulated, the reciprocating stroke of each of the plunger members 23 is determined on one side.

The stator 26 further includes outlet and inlet ports 34 and 35 disposed to both sides of a direction to which the inner ring member 402 is eccentrically moved, said outlet and inlet ports 34 and 35 being faced to said through bores 25 and individually communicating to passages 38 and 39 which are adapted to passing fluid to the torque transmission area.

The other comporments illustrated in Figs. 25 to 27 are substantially identified to them of said device in the first embodiment so that said comporments have the same reference numbers. The function of said device in the final embodiment is approximately based on the explanation of the first embodiment for essential parts.

Accordingly it well be eliminated further explanation of said device in the final embodiment in order to avoid the the similar description according to the function which is already understood in the detailed explanation relative to the fore embodiments.

Finally, the particular assembly of said device in the final embodiment can be, we think, applied to either one of the corresponding assembly described in the fore embodiments.

## Claims

(1) A torque transmission device with a hydraulic assembly for variable speed control characterized by comprising an input rotor having pump-driving means, an output rotor having pump-driven means, either one of said rotors including an inlet port for receiving fluid to be pumped and an outlet port for delivering said pumped fluid, said pump-driving means operating said pump-driven means by mutual differential rotation between said rotors so as to cause said fluid to be pumped, a control rotor, and a stator, either one of said control rotor and stator having flow-control means, and the other having flow-return means which is operated by said flow-control means, said flow-control means including a secondary inlet port communicating with said outlet port mentioned above so as to receive said fluid through a first passage and a secondary outlet port communicating with said inlet port mentioned above so as to deliver said fluid through a second passage, and being adapted to regulate amounts of pumping per rotation of said control rotor which integrally rotates with either one of said input and output rotors.

(2) A torque transmission device with a hydraulic assembly for variable speed control claimed in claim 1 in which said input, output and control rotors are co-axially disposed with each other.

(3) A torque transmission device with a hydraulic assembly for variable speed control claimed in claim 1 in which said pump-driven means of said output rotor comprises a swash plate disposed to one end thereof in which said inlet and outlet ports are positioned to both sides of inclination of said swash plate, and said pump-driving means of said input rotor comprises a plurality of cylinder bores formed to one end of said input rotor opposite to that of said output rotor in a manner to be equally spaced on a prescribed pitch circle co-axial to that of said input rotor, to which said inlet and outlet ports are tightly faced, a plurality of plunger members slidably inserted into the cylinder bores respectively in a manner to be guided by said swash plate, and a plurality of through bores for communicating said cylinder bores orderly with said inlet and outlet ports opposite to the through bores when said input and output rotors are differentially rotated with each other.

(4) A torque transmission device with a hydraulic assembly for variable speed control claimed in claim 1 in which said pump-driving means of said input rotor comprises a swash plate disposed to one end thereof in which said inlet and outlet ports are positioned to both sides of inclination of said swash plate, and said pump-driven means of said output rotor comprises a plurality of cylinder bores formed to one end of said output rotor opposite to that of said input rotor in a manner to be equally spaced on a prescribed pitch circle co-axial to that of said output rotor, to which said inlet and outlet ports are tightly faced, a plurality of plunger members slidably inserted into the cylinder bores respectively in a manner to be guided by said swash plate, and a plurality of through bores for communicating said cylinder bores orderly with said inlet and outlet ports opposite to the through bores when said input and output rotors are differentially rotated with each other.

(5) A torque transmission device with a hydraulic assembly for variable speed control claimed in claim 1 in which said pump-driven means of said output rotor comprises an internal gear, and said pump-driving means of said input rotor comprises a rotor body, a planet gear rotatably supported to said rotor body in a manner to be eccentrically disposed to the axis of said rotor body, said rotor body including said inlet and outlet ports formed thereto at both sides of said planet gear, and a partition forming two chambers communicating with said inlet and outlet ports by means of a space surrounded by said internal gear, said internal and planet gears mutually intermeshed so as to cause said fluid to be pumped when said input and output rotors are differentially rotated with each other.

(6) A torque transmission device with a hydraulic assembly for variable speed control claimed in claim 1 in which said pump-driving means of said input rotor comprises an internal gear, and said pump-driven means of said output rotor comprises a rotor body, a planet gear rotatably supported to said rotor body in a manner to be eccentrically disposed to the axis of said rotor body, said rotor body including said inlet and outlet ports formed thereto at both sides of said planet gear, and a partition forming two chambers communicated with said inlet and outlet ports by means of a space surrounded by said internal gear, said internal and planet gears mutually intermeshed so as to cause said fluid to be pumped when said input and output rotors are differentially rotated with each other.

(7) A torque transmission device with a hydraulic assembly for variable speed control claimed in claim 1 in which said pump-driven means of said output rotor comprises an outer ring member, and said pump-driving means of said input rotor comprises an inner ring member, either one of said ring members being disposed eccentrically to the axis of the corresponding rotor in a manner to be positioned opposite to the other ring member approximately in a radial direction, said corresponding rotor including said inlet and outlet ports disposed at both sides of eccentricity of said eccentric ring member, and the other of said ring members having a plurality of cylinder bores equally spaced on a prescribed pitch circle co-axial to that of the corresponding rotor and extending in a radial direction respectively, a plurality of plunger members slidably inserted into said cylinder bores respectively in a manner to be slidably guided by said eccentric ring member, and a plurality of through bores for communicating said cylinder bores orderly with said inlet and outlet ports opposite to said through bores when said input and output rotors differentially rotate with each other.

(8) A torque transmission device with a hydraulic assembly for variable speed control claimed in claim 1 in which said pump-driving means of said input rotor comprises an outer ring member, and said pump-driven means of said output rotor comprises an inner ring member, either one of said ring members being disposed eccentrically to the axis of the corresponding rotor in a manner to be positioned opposite to the other ring member approximately in a radial direction, said corresponding rotor including said inlet and outlet ports disposed at both sides of eccentricity of said eccentric ring member, and the other of said ring members having a plurality of cylinder bores equally spaced on a prescribed pitch circle co-axial to that of the corresponding rotor and extending in a radial direction respectively, a plurality of plunger members slidably inserted into said cylinder bores respectively in a manner to be slidably guided by said eccentric ring member, and a plurality of through

9

bores for communicating said cylinder bores orderly with said inlet and outlet ports opposite to said through bores when said input and output rotors are differentially rotated with each other.

(9) A torque transmission device with a hydraulic assembly for variable speed control claimed in one of claims 1 to 8 in which said flow-control means included in either one of said control rotor and stator comprises an adjustable swash plate disposed to one end thereof in which said secondary inlet and outlet ports are positioned to both sides of inclination of said adjustable swash plate, and said flow-return means included in the other comprises a plurality of cylinder bores formed to one end thereof in opposite to that of the former in a manner to be equally spaced on a prescribed pitch circle co-axial to that of the later, to which said secondary inlet and outlet ports are tightly faced, a plurality of plunger members slidably inserted into the cylinder bores respectively in a manner to be guided by said swash plate, a plurality of through bores for communicating said cylinder bores orderly with said secondary inlet and outlet ports opposite to the through bores when said control rotor is rotated, as well as said flow-control means including means for regulating the inclination angle of said swash plate.

(10) A torque transmission device with a hydraulic assembly for variable speed control claimed in one of claims 1 to 8 in which said flow-control mens included in said stator comprises an inner ring member which is disposed under a varied eccentricity defined to the axis of said control rotor, said stator including said inlet and outlet ports disposed at both sides of eccentricity of said inner ring member, and said flow-return means included in said control rotor comprises an outer ring member which is positioned opposite to the inner ring member approximately in a radial direction, said control rotor having a plurality of cylinder bores equally spaced on a prescribed pitch circle co-axial to that of the control rotor and extending in a radial direction respectively, a plurality of plunger members slidably inserted into the cylinder bores respectively in a manner to be guided by said inner ring member and a plurality of through bores for communicating said cylinder bores orderly with said secondary inlet and outlet ports opposite to the through bores when said control rotor is rotated, as well as said flow-control means including means for regulating the eccentricity of said inner ring member.

(11) A torque transmission device with a hydraulic assembly for variable speed control claimed in one of claims 1 to 8 in which said flow-control means included said stator comprises an outer ring member which is disposed under a varied eccentricity defined to the axis of said control rotor, said stator including said inlet and outlet ports disposed at both sides of eccentricity of said outer ring member, and said flow-return means included in said control rotor comprises an inner ring member which is positioned opposite to the outer ring member approximately in radial direction, said control rotor having a plurality of cylinder bores equally spaced on a prescribed pitch circle co-axial to that of the control rotor and extending in a radial direction respectively, a plurality of plunger members slidably inserted into the cylinder bores respectively in a manner to be guided by said outer member and a plurality of through bores for communicating said cylinder bores orderly with said secondary inlet and outlet ports opposite to the through bores when said control rotor is rotated, as well as said flow-control means including means for regulating the eccentricity of said outer ring member.

(12) A torque transmission device with a hydraulic assembly for variable speed control claimed in claim 9 in which said regulating means includes a pair of pivots aligned to a direction perpendicular to the axis of said control rotor in a manner to be directed toward both sides of the inclination of said adjustable swash plate.

(13) A torque transmission device with a hydraulic assembly for variable speed control claimed in one of claims 1 to 12 in which there is provided means for supplying fluid individually to said first and second passages so as to maintain fluid pressures at prescribed values.

(14) A torque transmission device with a hydraulic assembly for variable speed control claimed in claim 13 in which said supplying means includes a pump system having a pump, a pressure control valve, a motor, and two one-way valves for preventing supplied fluids to be returned from said first and second passages.

FIG. 1

FIG. 3

FIG. 2

FIG. 5

FIG. 4

FIG. 6

FIG. 7

FIG.8

EP 0 376 672 A2

FIG.9

FIG.12

FIG.11

FIG. 10

FIG.13

FIG.20

FIG.15

FIG.14

# FIG.16

# FIG.17

EP 0 376 672 A2

FIG.18

FIG.19

FIG.21

FIG.22

FIG.24

FIG.23

FIG.25

FIG.26

FIG.27